# EUROPEAN PATENT APPLICATION

(11) **EP 1 610 013 A1**
(43) Date of publication of application: **28.12.2005**
(21) Application number: 04710486.4
(22) Date of filing: 12.02.2004
(51) Int. Cl.: F16C 33/76, F16C 19/52, F16C 41/00, F16C 19/18

(54) **SENSOR ASSEMBLY BODY, SEAL DEVICE, AND ROLLING BEARING DEVICE FOR MOTOR VEHICLE**

(30) Priority: 12.02.2003 JP 2003033607; 12.02.2003 JP 2003033608
(71) Applicant: Koyo Seiko Co., Ltd., Osaka 542-0081 (JP)
(72) Inventor: SENTOKU, Minoru, Chuo-ku, Osaka-shi, Osaka 542-0081 (JP); MATSUI, Shunichi, Chuo-ku, Osaka-shi, Osaka 542-0081 (JP); INOUE, Masahiro, Chuo-ku, Osaka-shi, Osaka 542-0081 (JP); SHIGE, Yoshifumi, Chuo-ku, Osaka-shi, Osaka 542-0081 (JP); KOYAGI, Katsura, Chuo-ku, Osaka-shi, Osaka 542-0081 (JP)
(74) Representative: Steinmeister, Helmut
(86) International application number: PCT/JP2004/001451
(87) International publication number: WO 2004/072500

(57) **Abstract**

A seal apparatus comprises an outer ring side seal ring fixed to an outer ring member, and an inner ring side seal ring fixed to an inner ring member. A pulser ring is fixed to a ring-shaped core metal of the inner ring side seal ring. On an outer diameter side of the ring-shaped core metal of the outer ring side seal ring, a magnetic sensor is molded with resin by an external member to be integrated therewith. A connector connected to the magnetic sensor is successively formed with the external member. A reinforcing member which reinforces the sensor side connector is provided on at least either of the external member or the sensor side connector.

## Description

### BACKGROUND OF THE INVENTION

The present invention relates to a rolling bearing apparatus for vehicles wherein a sensor and a pulser ring for detecting rotation used for ABS (anti-lock brake system) or the like in automobiles are incorporated into a seal device known as a pack seal and a gap between inner and outer rings is sealed with this seal device with rotation detector incorporated therein. The invention also relates to a sensor assembly and seal device constituting the rolling bearing apparatus for vehicles.

In the related art, there has been proposed a rolling bearing apparatus for vehicles provided with a rotation detector (refer to, for example, Japanese Laid-Open Patent Application Publication No. 7-197938). In this the rolling bearing apparatus for vehicles, a rolling member is interposed between respective raceway surfaces of an inner ring constituting a rotating ring and an outer ring constituting a fixed ring. A space between the inner and outer rings is sealed by a seal device.

The rotation detector comprises an encoder element fixed to the inner ring and a detection element fixed to the outer ring. The detection element detects the rotational state of the inner ring by detecting the encoder element.

An example of application of the bearing apparatus provided with the rotation detector to an automobile is one wherein a bearing apparatus for rotatably supporting an axle of an automobile with respect to a vehicle body is provided with a rotation detector used for ABS or the like. More specifically, it is constituted such that the inner ring of the bearing apparatus is outward fitted on the axle of the automobile. The outer ring is fixed to the vehicle body via a knuckle and the sensor detects changes in the magnetic field of a pulser ring fixed on the inner ring. The detection signal is transmitted to an electronic circuit of the vehicle body via a wire harness.

Normally, the sensor is fixed to the knuckle and the electronic circuit is provided at the vehicle body. For this reason, since the knuckle is connected to a damper against swaying of the vehicle body when running, vibration of the vehicle body is not transmitted to the knuckle. Therefore, the electronic circuit provided at the vehicle body is therefore caused to vibrate by swaying of the vehicle body. The sensor, however, is fixed to the knuckle is not influenced by vibration of the vehicle body. Thus the wire harness connecting the sensor and the electronic circuit may become disconnected because of the vibration of the vehicle body. Further, recently, to save space, ABS sensors have been incorporated in a seal device, known as a pack seal, which is fitted on the bearing apparatus. For this reason there are the following problems: if the wire harness disconnects and the ABS sensor is in an abnormal state, it is necessary to replace the entire hub unit that includes the bearing apparatus. Accordingly the maintenance operation takes time and labor, and the expense is high. Moreover, the weight of the wire harness is applied to the connecting portion between the sensor and the wire harness due to vehicle body swaying or the like. Accordingly, disconnection may occur due to inadequate strength at the connecting portion.

### BRIEF SUMMARY OF THE INVENTION

The present invention is a sensor assembly which is fixed to an outer ring member of a rolling bearing apparatus for vehicles and which detects the rotational state of an inner ring member. It comprises a seal ring, a sensor integrally provided at the seal ring, an external member which molds the sensor with resin to integrate the sensor with the seal ring, a sensor side connector whose one end is successively formed with the external member and whose other end is freely attachable/detachable with a wire harness side connector, and a reinforcing member which is coupled to at least either of the external member or the sensor side connector and which reinforces the strength of the sensor side connector.

Preferably, the other end of the external member extends radially outward, and the reinforcing member is constituted by an extension portion of the seal ring which extends towards the other end of the external member.

Preferably, the other end of the sensor side connector extends radially outward, and the reinforcing member is constituted by the extension portion of the seal ring which extends towards the other end of the sensor side connector.

A seal device of the present invention comprises an outer ring side seal ring which is fixed to an outer ring member and composed of nonmagnetic material, an inner ring side seal ring fixed to an inner ring member, a magnetic sensor provided at the periphery of the outer ring side seal ring, a magnetic body ring which constitutes a rotation detector in conjunction with the magnetic sensor and is integrally provided at a position radially opposite the magnetic sensor in the inner ring side seal ring, an external member which molds the magnetic sensor with resin to integrate the magnetic sensor with the outer ring side seal ring, a sensor side connector whose one end is successively formed with the external member and whose other end is constituted to be freely attachable/detachable from a wire harness side connector, and a reinforcing member which is coupled to at least either of the external member or the sensor side connector and reinforces the strength of the sensor side connector.

The rotation detector used, for example, is an active type detector which changes output according to changes in magnetic flux. The magnetic body ring includes the pulser ring, and the magnetic sensor includes a magnetic sensor which is comprised of two magnetic detection portions disposed circumferentially apart from each other.

A vehicle rolling bearing apparatus of the present invention comprises an outer ring member fixed to a vehicle body side, an inner ring member which is concentrically disposed with the outer ring member, a plurality of rolling members which are rotatably disposed between the outer ring member and the inner ring member, an outer ring side seal ring fixed to the outer ring member, an inner ring side seal ring which constitutes a seal device in conjunction with the outer ring side seal ring and is fixed to the inner ring member, a magnetic sensor integrally provided at the outer ring side seal ring, an external member which molds the magnetic sensor with resin to integrate the magnetic sensor with the outer ring side seal ring, a sensor side connector whose one end is successively formed with the external member and whose other end is attachable/detachable with a wire harness side connector, a reinforcing member which is coupled to at least either of the external member or the sensor side connector and reinforces the strength of the sensor side connector, and a pulser ring which constitutes a rotation detector in conjunction with the magnetic sensor and which is fixed to a side of the inner ring side seal ring.

According to the rolling bearing apparatus of the present invention, the rotation detector comprising the magnetic sensor and the magnetic body ring is integrated with the seal device and the sensor side connector connected to the magnetic sensor is successively formed with the external member which molds the magnetic sensor with resin, so the seal device, the rotation detector, and the sensor side connector are integrated.

The wire harness for connecting the magnetic sensor and the electronic circuit of the vehicle body is connected to the electronic circuit at one end, and at the other end has the wire harness side connector which is attachably/detachably connected to the sensor side connector which is integrally molded with the magnetic sensor. The electronic circuit is connected to the magnetic sensor by attachably/detachably connecting the wire harness side connector to the sensor side connector which is integrally provided at the magnetic sensor. Thus, the wire harness is separated from the integrated object comprising the seal device, the rotation detector, and the sensor side connector, so that if the wire harness breaks due to swaying of the vehicle body when running, replacement is easily performed by removing just the wire harness from the sensor side connector portion, thereby making it possible to easily perform maintenance inexpensively.

In the sensor assembly constituting the outer ring side seal ring of the seal device, the seal ring extends in an outer diameter direction to form a reinforcement portion, and the sensor side connector integrally provided at the external member is reinforced with the reinforcement portion. Hence, when the wire harness side connector is connected to the sensor side connector and the weight of the wire harness is applied to the sensor side connector formed at the weak-in-strength external member, the sensor side connector can be prevented from bending in the direction of the reinforcement portion, thereby preventing magnetic sensor line breaks or the like.

According to the rolling bearing apparatus of the present invention, the rotation detector comprising the magnetic sensor and the magnetic body ring is integrally molded with the seal device, and the sensor side connector connected to the magnetic sensor is successively formed with the external member which molds the magnetic sensor with resin, so that the seal device, the rotation detector, and the sensor side connector are integrated.

The wire harness for connecting the magnetic sensor and the electronic circuit of the vehicle body is connected to the electronic circuit at one end, and at the other end has the sensor side connector which is attachably/detachably connected to the wire harness side connector which is integrated with the magnetic sensor. The magnetic sensor and the electronic circuit are connected by attachably/detachably connecting the wire harness side connector to the sensor side connector. Thus, the wire harness is separated from the integrated object comprising the seal device, the rotation detector, and the sensor side connector, so that when the wire harness breaks due to swaying of the vehicle body when running, replacement is easily performed by removing just the wire harness from the sensor side connector portion, thereby making it possible to easily perform maintenance inexpensively.

In the sensor assembly constituting the outer ring side seal ring of the seal device, a contact surface which makes contact with an outer peripheral surface of the outer ring member is formed at the sensor side connector integrally provided at the external member which extends in the outer diameter direction. Hence, when the wire harness side connector is connected to the sensor side connector and the weight of the wire harness is applied to the sensor side connector formed at the weak-in-strength external member, the connector can be prevented from bending in the direction of the outer peripheral surface of the outer ring member, thereby preventing magnetic sensor line breaks or the like.

### BRIEF DESCRIPTION OF THE DRAWINGS

Accompanying the specification are figures which assist in illustrating the embodiments of the invention, in which:
FIG. 1 is a cross-sectional view showing the entire constitution of a rolling bearing apparatus for vehicles according to an embodiment of the present invention;
FIG. 2 is an expanded sectional view of a principal portion of FIG. 1;
FIG. 3 (A) is a signal waveform diagram of one detection portion of the two magnetic detection portions constituting a magnetic sensor;
FIG. 3 (B) is a signal waveform diagram of the other detection portion of the two magnetic detection portions constituting the magnetic sensor;
FIG. 4 is an explanatory diagram of the magnetic sensor;
FIG. 5 (A) is an oblique view from the front of the seal device;
FIG. 5 (B) is an oblique view from the back of the same seal device;
FIG. 6 is a cross-sectional view of the seal device 30, omitting a sensor side connector;
FIG. 7 is a cross-sectional view of the seal device including the sensor side connector;
FIG. 8 is a cross-sectional view showing a portion of a rolling bearing apparatus for vehicles according to another embodiment of the present invention;
FIG. 9 is an enlarged view of a principal portion of FIG. 8;
FIG. 10 (A) is an oblique view from the front of the seal device of FIG. 8;
FIG. 10 (B) is an oblique view from the back of the seal device of FIG. 8; and
FIG. 11 is a cross-sectional view showing a portion of a rolling bearing apparatus for vehicles according to still another embodiment of the present invention.

### DETAILED DESCRIPTION OF THE INVENTION

Referring to the drawings, description will be made in detail of a rolling bearing apparatus for vehicles according to a preferred embodiment of the present invention.

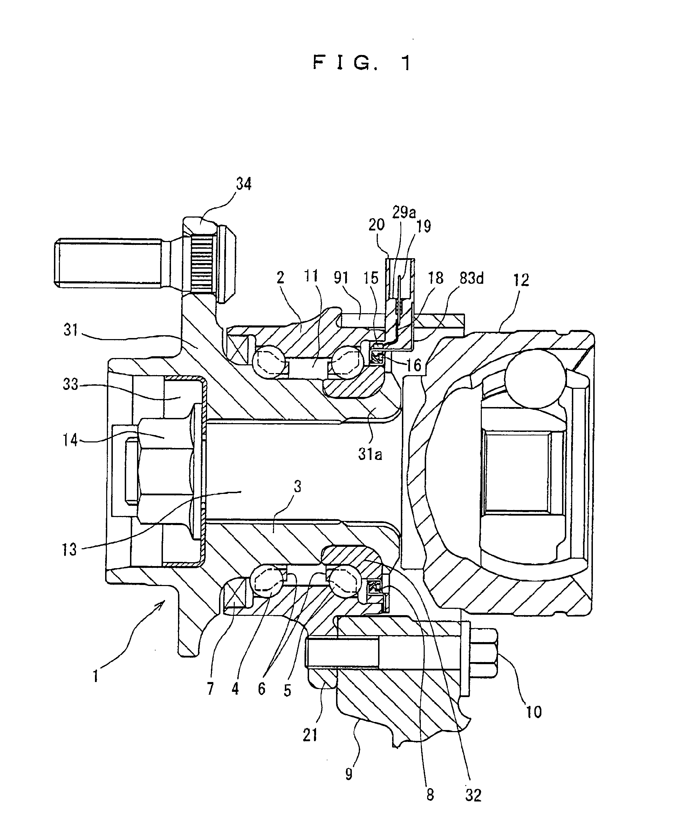

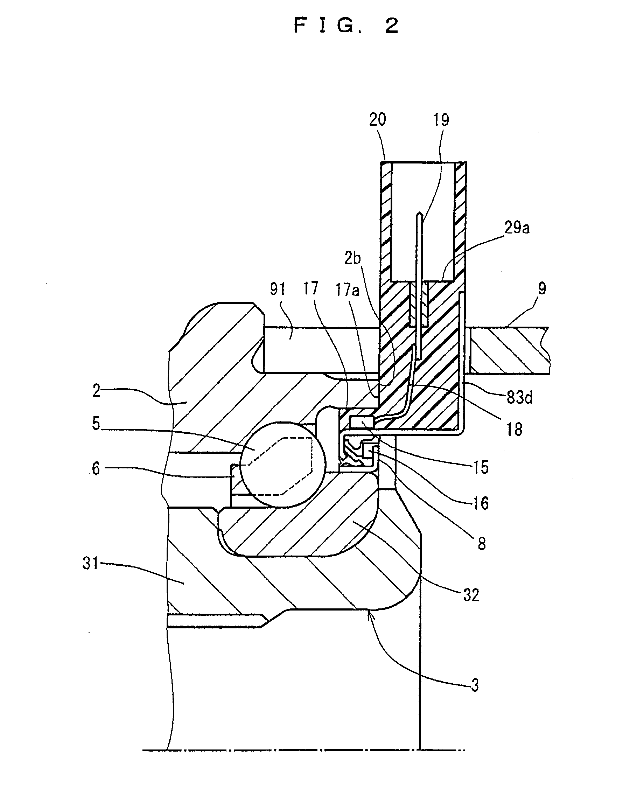

FIG. 1 is a cross-sectional view showing the entire constitution of the rolling bearing apparatus for vehicles according to the embodiment of the present invention, and FIG. 2 is an expanded sectional view of a principal portion of FIG. 1. In these drawings, the left side is a vehicle outward side and the right side is a vehicle inward side. Although the rolling bearing apparatus 1 is for driving wheels, it can also be applied to a coupled driving wheel.

A flange portion 21 formed on an outer peripheral surface of an outer ring member 2 as a fixing ring is fixed to a knuckle 9 via a bolt 10, and the outer ring member 2 is thereby unrotatably supported by the vehicle body. Two outer ring raceway surfaces are formed on an inner peripheral surface of the outer ring member 2 in an axial direction. An inner ring member 3 is a rotating ring constituted by a hub wheel 31 and an inner ring 32. The hub wheel 31 and the inner ring 32 are rotatably supported by the outer ring member 2 via rolling members 4 and 5 which are constituted by balls in respective rows circumferentially disposed at equidistant positions in a snap cage 6, respectively.

A flange portion 34 is integrally formed radially outward on an outer peripheral surface of the hub wheel 31 at the vehicle outward side. A brake disc rotor and a tire wheel are mounted on the flange portion 34 and a wheel is mounted on the tire wheel.

An outer peripheral surface more to the vehicle inward side than from the flange portion 34 of the hub wheel 31 is used as the inner ring raceway surface of the rolling member 4 of one row. A cylindrical minor diameter portion 31a is formed on the hub wheel 31 at the vehicle outward side, and the inner ring 32 is outward fitted to an outer peripheral surface of this minor diameter portion 31a. An outer peripheral surface of the inner ring 32 is used for an inner ring raceway surface of the rolling member 5 of the other row. At the edge face on the vehicle inward side of the inner ring 32, an edge section deformed outward in the minor diameter portion 31a of the hub wheel 31 direction is crimped.

A shaft portion 13 is integrally formed with a bowl-shaped outer ring member 12 of a constant-velocity joint. The shaft portion 13 is inserted into a central hole of the hub wheel 31 via a spline. A nut 14 is screwed to an end section of the shaft portion 13 at the vehicle outward side and is tightened to an end face of a recess portion 33 of the hub wheel 31. Thus the necessary pre-pressure is applied to the rolling members 4 and 5 of both rows, and the bowl-shaped outer ring member 12 is incorporated with the hub wheel 31 and rotates integrally therewith.

Seal devices 7 and 8 hermitically seal a ring-shaped bearing space 11 between the outer ring member 2 and the inner ring member 3 from both sides in the axial direction at the vehicle outward side and the vehicle inward side, respectively. Thereby, the seal devices 7 and 8 prevent lubricant inside the ring-shaped bearing space 11 from leaking out and prevent mud, water or the like from infiltrating. The seal device 7, for example, is constituted by adhering a rubber lip (not shown) which slidingly contacts the hub wheel 31 to a ring-shaped core metal (not shown) which is inwardly fitted to the outer ring member 2.

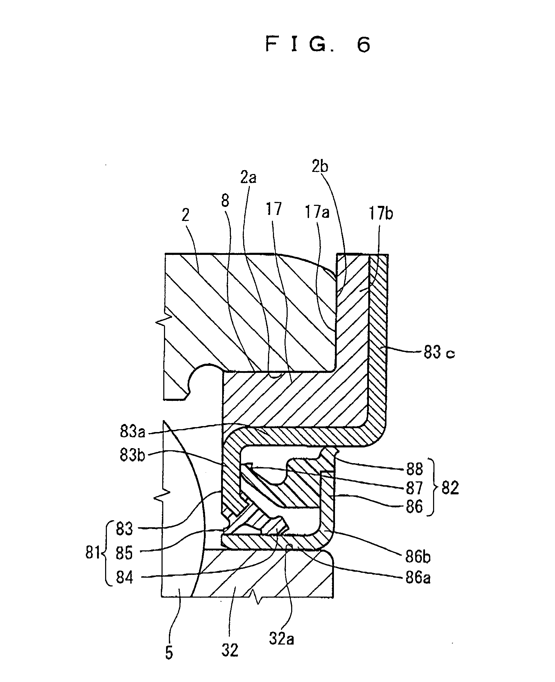

The seal device 8 is constituted by combining an outer ring side seal ring 81 (FIG. 6), which is one of the components of the sensor assembly, and an inner ring side seal ring 82. The sensor assembly comprises the outer ring side seal ring 81, a magnetic sensor 15, and an external member 17.

The outer ring side seal ring 81 is attached to the side of the outer ring member 2 and comprises a ring-shaped core metal 83, and a main lip 84 and an auxiliary lip 85 to cover this ring-shaped core metal 83. The ring-shaped core metal 83 comprises a cylindrical portion 83a extended in the axial direction, and a ring-shaped plate portion 83b extended radially inward from an inner edge side in the axial direction of the cylindrical portion 83a. The ring-shaped core metal 83 is a nonmagnetic ring, and is made of a nonmagnetic material, for example nonmagnetic stainless steel or the like.

The inner ring side seal ring 82 is attached to the side of the inner ring 32 and consists of a ring-shaped core metal 86, and an axial direction lip 87 and a radial direction lip 88 to cover this ring-shaped core metal 86. The ring-shaped core metal 86 comprises a cylindrical portion 86a which extends in the axial direction and radially opposes the cylindrical portion 83a, and a ring-shaped plate portion 86b which extends radially outward from an outer edge side in the axial direction of the cylindrical portion 86a and axially opposes the ring-shaped plate portion 83b. The respective lips 84, 85, 87, and 88 are made of rubber such as nitrile butadiene rubber (NBR) or the like, and are vulcanized to adhere to the ring-shaped core metal 83 and 86.

The magnetic sensor 15 for detecting the rotational state of the inner ring member is integrally incorporated in the outer ring side seal ring 81 and the pulser ring 16 that is a magnetic ring is integrally incorporated in the inner ring side seal ring 82. The rotation detector for detecting the rotation of the inner ring 32 comprises the magnetic sensor 15 and the pulser ring 16.

The magnetic sensor 15 is mounted in a non-contact manner above the outer peripheral surface of the cylindrical portion 83a in the ring-shaped core metal 83 of the outer ring side seal ring 81. It is provided by integrally molding (insert molding) the external member 17 which resin-molds the magnetic sensor 15 at the outer diameter of the cylindrical portion 83a. The external member 17 is made of an engineering plastic, preferably poly-phenylene-sulphide (PPS), poly-butylene-terephthalate (PST), poly-amide (PA) or the like.

A sensor side connector 20 is integrally molded with the external member 17. One end of the sensor side connector 20 extends to the external member 17 and the other end extends in the outer diameter direction and is attachably/detachably connected to a wire harness side connector (not shown) connected to the electronic circuit of the vehicle body. The sensor side connector 20 is preferably made of an engineering plastic, such as PPS, PBT, PA, or the like. A pin 19 for connection with the wire harness side connector projects from the bottom face of a recess portion 29a on the other end side inside the sensor side connector 20, and the magnetic sensor 15 and the pin 19 are connected to a signal line 18.

A ring-shaped outer ring member contact surface 17a which makes contact with the end face 2b in the axial direction of the outer ring member 2 is formed on the external member 17. A catch for locking with the wire harness side connector may be provided at the periphery of the sensor side connector 20.

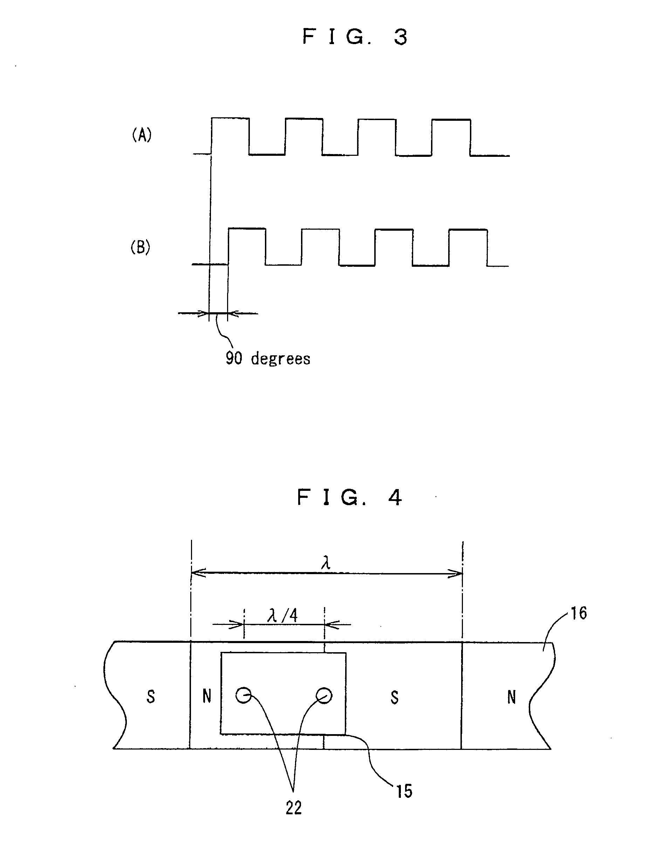

The magnetic sensor 15 comprises two magnetic detection portions which are disposed circumferentially apart from each other, such as a Hall element or a magnetoresistive element, and is capable of detecting rotational direction in addition to rotational angle. With regard to a rotational phase relationship between detection signals of two magnetic sensor portions, the magnetic sensors are disposed such that when one magnetic sensor produces a first rectangular wave signal as shown in FIG. 3 (A), the other magnetic sensor produces a second rectangular wave signal, the phase of which is shifted from that of the first rectangular signal by 90 degrees as shown in FIG. 3 (B). Whether the rotational direction of the inner ring 3 is right or left can be determined according to a phase advance or a phase delay between both detection signals that the respective magnetic detection portions produce.

As shown in FIG. 4, a Hall IC incorporating two Hall elements 22 is preferably used as the magnetic detection portion of the magnetic sensor 15. That is, it is constituted such that two Hall elements 22 are disposed at an interval (λ /4) so that the phase difference between outputs from the respective Hall elements is 90 degrees relative to the magnetizing pitch *λ* of the pulser ring 16, thereby making it possible to detect the rotational direction. The magnetizing pitch λ is the total length ofN pole and S pole magnetization.

The pulser ring 16 is formed by vulcanizing and molding rubber that contains a magnetic powder, and is magnetized with a configuration such that N pole and S pole pieces are disposed alternately in the circumferential direction, for example. The pulser ring 16 is fixed to an inner surface of the ring-shaped plate portion 86b in the ring-shaped core metal 86 of the inner ring side seal ring 82. The magnetic sensor 15 is fixed to a position where it is capable of detecting a change in the magnetic field of the pulser ring 16. The sensing direction (inner diameter direction) of the magnetic sensor 15 and the magnetization direction (axial direction) of the pulser ring 16 are orthogonal to each other.

In the seal device 8, with regard to the outer ring side seal ring 81 into which the magnetic sensor 15 is incorporated, the external member 17 is press-fitted to a shoulder portion 2a of the inner peripheral surface of the outer ring member 2. With regard to the inner ring side seal ring 82 in which the pulser ring 16 is incorporated, the ring-shaped core metal 86 is press-fitted to a shoulder portion 32a of the outer peripheral surface of the inner ring 32. The seal device 8 is thereby attached tightly to the outer ring member 2 and the inner ring 32. The seal device 8 is positioned by causing an outer ring contact surface 17a to make contact with the end face 2b in the axial direction of the outer ring member 2.

In the rolling bearing apparatus 1 provided above, the edge section of the outer ring member 2 on the vehicle inward side is inwardly fitted to the knuckle 9, and the flange portion 21 of the outer ring member 2 is fixed to the knuckle 9 with the bolt 10. The knuckle 9 is formed as a cylinder, and a cutout 91 into which the sensor side connector 20 is inserted is formed at the vehicle outward side. The rolling bearing apparatus 1 is fixed to the knuckle 9 in a state in which the sensor side connector 20 has been inserted into the cutout 91.

The wire harness side connector is provided at the tip of the wire harness connected to the electronic circuit of the vehicle body. The sensor side connector 20 is attachable/detachable with this wire harness side connector. Since the wire harness side connector is connected to the sensor side connector 20, the magnetic sensor 15 is connected to the electronic circuit of the vehicle body via a connection with the sensor side connector 20 and the wire harness side connector.

In the rolling bearing apparatus 1, when the inner ring member 3 rotates in a state in which the outer ring member 2 is unrotatably fixed to the knuckle 9, each pole piece of the pulser ring 16, which integrally rotates with the inner ring member 3, successively opposes each of the magnetic detection portions of the magnetic sensor 15. When this happens, the position of the pulser ring 16 opposite each of the magnetic detection portions of the magnetic sensor 15 successively changes, so the direction of magnetic flux generated from the pulser ring 16 alternately changes, and first and second rectangular wave signals are output from the magnetic sensor 15. The waveform period of each of these rectangular wave signals changes according to the rotational phase and rotational speed of the pulser ring 16. Processing the waveform of each rectangular wave signal finds the rotational phase, the rotational speed, the rotational frequency, the rotational direction and the like of the inner ring member 3.

In the rolling bearing apparatus 1 the wire harness is separated from the integrated object comprising the seal device 8, the magnetic sensor 15, the pulser ring 16, and the sensor side connector 20. Because of this separation, when the wire harness is broken by swaying of the vehicle body when running, the wire harness side connector can be removed with ease from the sensor side connector to replace the wire harness. Accordingly, it is possible to easily perform maintenance inexpensively.

Since the wire harness is separated from the integrated object comprising the seal device 8, the magnetic sensor 15, the pulser ring 16, and the sensor side connector 20, when the rolling bearing apparatus 1 is fixed to the knuckle 9 in a state in which the integrated object is fitted onto the rolling bearing apparatus 1, there is no wire harness to interfere with the fixing operation. Accordingly, there is an improving mountability in vehicles.

The pulser ring 16 is provided at the ring-shaped core metal 86 of the inner ring side seal ring 82, and the magnetic sensor 15 is provided at the ring-shaped core metal 83 of the outer ring side seal ring 81, and the pulser ring 16 and the magnetic sensor 15 are integrated with the seal device 8. Due to this integrated constitution, compact formation of the rotation detector can be achieved and it can be easily installed even in a small space such as the driving wheel side.

The pulser ring 16 is fixed to the ring-shaped core metal 86 of the inner ring side seal ring 82, and the magnetic sensor 15 is molded with resin by the external member 17 to be integrated with the ring-shaped core metal 83 of the outer ring side seal ring 81. Accordingly, hermetically sealing performance of the pulser ring 16 and the magnetic sensor 15 is improved. This improves the dust resistance performance of the rolling bearing apparatus.

Since the signal line 18 of the magnetic sensor 15 is molded with resin by the external member 17, a connecting portion between the magnetic sensor 15 and the signal line 18 is reinforced. Accordingly, breaks are prevented in the signal line 18. Furthermore, since the wire harness is separated from the integrated object comprising the seal device 8, the magnetic sensor 15, the pulser ring 16, and the sensor side connector 20, the weight of the wire harness is not applied to the external member 17. This prevents deterioration in the hermetically sealing performance of the external member 17 due to lack of strength while the wire harness is attached to the connector 20.

The sensor side connector 20 is integrally formed at the external member 17 which resin-molds the magnetic sensor 15 of the outer ring side seal ring 81. This results in excellent insulation and vibration resistance performance and reduced costs. The sensor side connector 20 is provided inserted into the cutout 91 formed on the knuckle 9 on the vehicle outward side. Accordingly, it is not necessary to form a through hole in the middle of the axial direction of the knuckle 9 as in prior art. This helps prevent deterioration of the strength of the knuckle 9.

As disclosed, the sensor side connector 20 projecting in the outer diameter direction engages with the cutout 91 from the vehicle outward side in a state in which the rolling bearing apparatus 1 is fitted with the seal device 8 with which the sensor side connector 20 is integrally formed. As a result, the rolling bearing apparatus 1 can be fixed to the knuckle 9 with ease. Since the magnetic sensor 15 is molded by the external member 17 and is integrally formed with the outer ring side seal ring 81, the magnetic sensor 15 is protected from an external environment. Accordingly, there is an improving reliability.

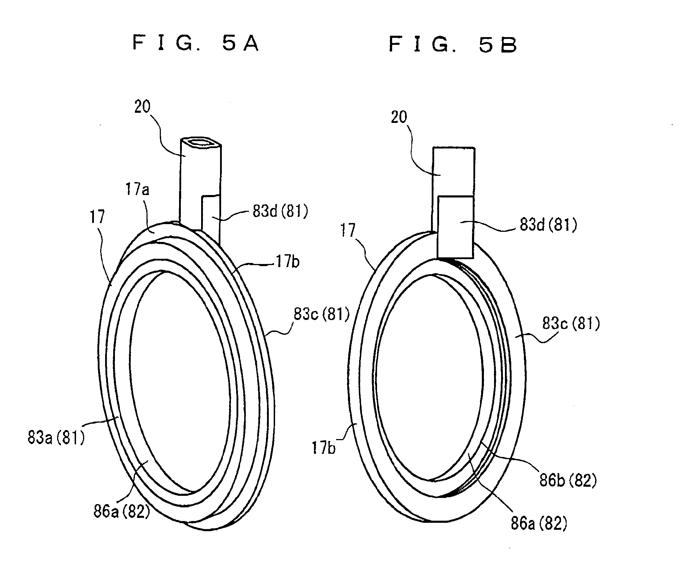

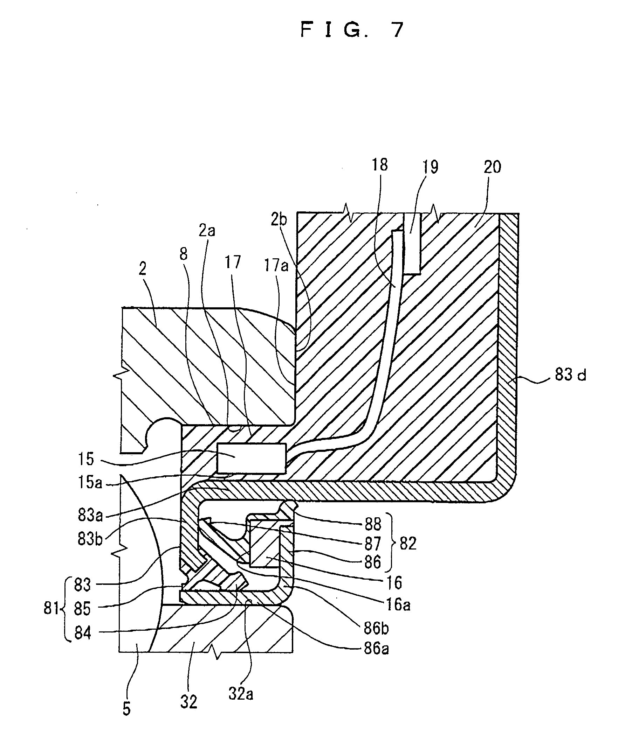

Referring to FIG. 5 through FIG. 7, description will further be made of the seal device 8, especially of the outer ring side seal ring 81 and the external member 17. FIG. 5 (A) is an oblique view from the front of the seal device 8, FIG. 5 (B) is an oblique view from the back of the same seal device 8, FIG. 6 is a cross-sectional view of the seal device 8 without the sensor side connector 20, and FIG. 7 is a cross-sectional view of the seal device 8 including the sensor side connector 20.

The outer ring side seal ring 81 comprises the ring-shaped core metal 83, and the main lip 84 and the auxiliary lip 85 which fitted on this ring-shaped core metal 83 as described above. The ring-shaped core metal 83 comprises a cylindrical portion 83a and a ring-shaped plate portion 83b.

The inner ring side seal ring 82 comprises the ring-shaped core metal 86, and the axial direction lip 87 and the radial direction lip 88 which cover this ring-shaped core metal 86. The ring-shaped core metal 86 of the inner ring side seal ring 82 comprises a cylindrical portion 86a and a ring-shaped plate portion 86b.

The other end of the external member 17 is formed into a ring shape, extending radially outward. One end of the sensor side connector 20 is integrally formed at the other end of the external member 17. Its other end is formed into a cylindrical shape, extending radially outward further than the other end of the external member 17.

The cylindrical portion 83a of the ring-shaped core metal 83 of the outer ring side seal ring 81 extends towards the vehicle inward side and is bent radially outward at two intermediate points along such extension. That is, for an extension end section of the cylindrical portion 83a on the vehicle inward side, as shown in FIG. 6 and FIG. 7, one of the bent portions thereof is formed as a ring-shaped reinforcement portion 83c facing the back face of the other end of the external member 17. On the other hand, the other bent portion thereof is formed as a half-cylindrical reinforcement portion 83d facing the other end of the sensor side connector 20. It is not mandatory to have both reinforcement portions 83c and 83d. That is, having only reinforcement portion 83d is sufficient.

The reinforcement portion 83c covers the whole back face of a ring-shaped portion 17b of the external member 17 having the outer ring contact surface 17a. The reinforcement portion 83d covers the surface of the sensor side connector 20 from its one end to the other end. Thus the reinforcement portion 83d covers the vehicle inward side surface of the sensor side connector 20 and is formed in a successive formation with the reinforcement portion 83c. The length of the reinforcement portion 83d in the radial direction reaches an intermediate point of the connector 20 in the radial direction, and may also be formed over the whole length of the connector 20 in the radial direction. The shape of the reinforcement portion 83d is not limited to one covering the vehicle inward side surface of the connector 20. The shape may also be formed to cover the entire perimeter of the connector 20, for example.

In the sensor assembly constituting the outer ring side seal ring 81 of the seal device 8, the reinforcement portions 83c and 83d are formed by extending the ring-shaped core metal 83 on the vehicle inward side in the outer diameter direction. The sensor side connector 20 formed successively with the external member 17 is reinforced by the reinforcement portions 83c and 83d.

Therefore, when the sensor side connector 20 is attachably/detachably connected to the wire harness side connector and the weight of the wire harness is applied to the sensor side connector 20 formed at the thin, weak-in-strength external member 17, the sensor side connector 20 is prevented from being bent in the direction of the reinforcement portions 83c and 83d, i.e. toward the vehicle inward side (knuckle side). Accordingly, disconnection is prevented of the signal line 18 of the magnetic sensor 15 and deterioration is prevented of hermetically sealing performance of the external member 17 or the like. Thus, there is an improved reliability.

Furthermore, since the signal line 18 of the magnetic sensor 15 is resin-molded by the external member 17, the connecting portion between the magnetic sensor 15 and the signal line 18 is reinforced. Accordingly, disconnection is further prevented.

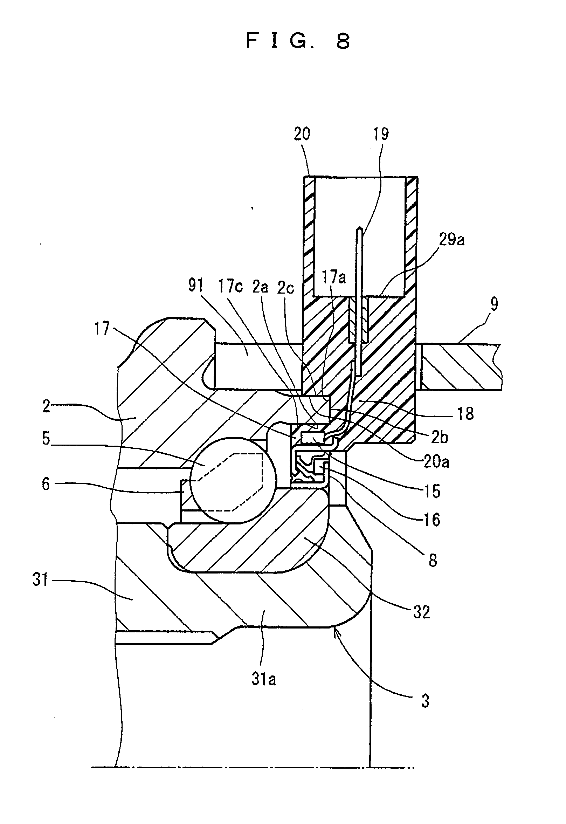

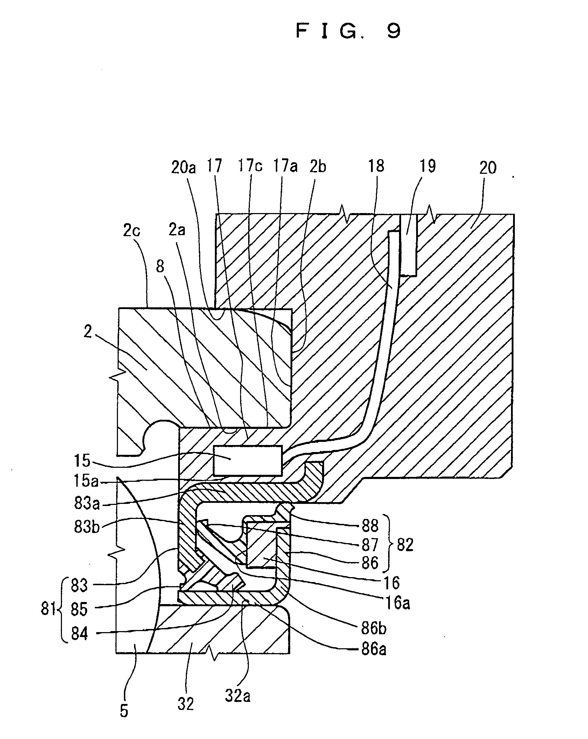

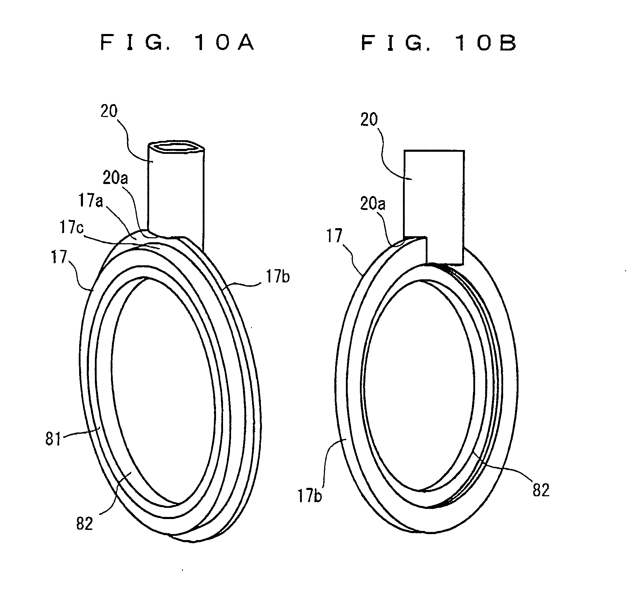

Referring to FIGS. 8 through 10, explanation will be made of another embodiment of the present invention. In these drawings, the same symbol is given to a component that is the same as or corresponds to a component of FIGS. 1 through 7 and detailed description of the that component will be omitted.

The ring-shaped positioning face 17a, which makes contact with the end face 2b in the axial direction of the outer ring member 2, is formed at the external member 17. In addition, a contact surface 20a, which makes contact with an outer peripheral surface 2c of the outer ring member 2, is formed on the sensor side connector 20 at the vehicle outward side.

The seal device 8 is positioned so that the positioning face 17a of the external member 17 makes contact with the end face 2b in the axial direction of the outer ring member 2. In this state, it is disposed such that the contact surface 20a of the sensor side connector 20 makes contact with the outer peripheral surface 2c of the outer ring member 2 and the sensor side connector 20 overlaps the outer ring member 2. In other words, an edge section of the outer ring member 2 on the vehicle inward side is inserted into a recess portion formed between the contact surface 20a of the sensor side connector 20 and the outer peripheral surface 17c of the external member 17.

The outer peripheral surface 2c of the outer ring member 2 which makes contact with the contact surface 20a of the sensor side connector 20 is not limited to a cylindrical surface. For example, by forming a recess portion only at the portion which the contact surface 20a of the sensor side connector 20 contacts and by fitting the sensor side connector 20 into this recess portion, it may be used as a guide for circumferential position when the seal device 8 is fixed to the outer ring member 2.

According to the above constitution, in the sensor assembly constituting the outer ring side seal ring 81 of the seal device 8, the contact surface 20a which makes contact with the outer peripheral surface 2c of the outer ring member 2 is formed at the sensor side connector 20 which extends in the outer diameter direction and is successively formed with the resin-made external member 17.

Hence, when the wire harness is connected to the sensor side connector 20 and the weight of the wire harness is applied to the sensor side connector 20 formed at the resin-made weak-in-strength external member 17, since the outer ring member 2 becomes the reinforcing member for the sensor side connector 20, the sensor side connector 20 from is prevented being bent in the direction of the outer peripheral surface of the outer ring member, i.e. to the vehicle outward side (tire side). Thus, disconnection is prevented of the signal line 18 of the magnetic sensor 15 and deterioration is prevented of hermetically sealing performance of the resin-made external member 17 or the like. Accordingly, reliability is improved.

Furthermore, since the signal line 18 of the magnetic sensor 15 is molded by the resin-made external member 17, the connecting portion between the magnetic sensor 15 and the signal line 18 is reinforced. Thus, disconnection is further prevented.

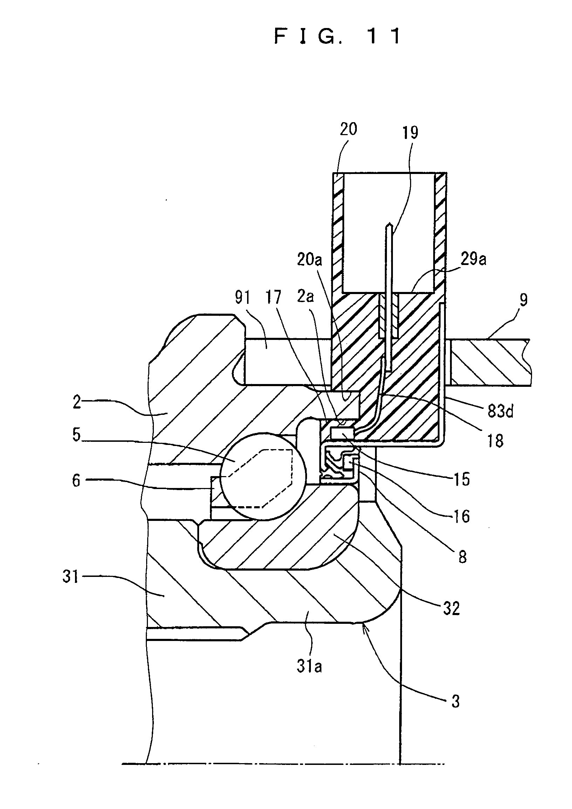

Description will be made of still another embodiment of the present invention based on FIG. 11. Referring to FIG. 11, the contact surface 20a, which makes contact with the outer peripheral surface 2c of the outer ring member 2, is formed on the sensor side connector 20 at the vehicle outward side in this additional embodiment of the present invention. In this embodiment, since the contact surface 20a which makes contact with the outer peripheral surface 2c of the outer ring member 2 is additionally formed at the sensor side connector 20, it is possible to prevent the sensor side connector 20 from being bent almost to the vehicle outward side. The sensor side connector 20 is therefore held essentially at the vehicle outward side or essentially at the vehicle inward side. Accordingly, it is possible to prevent disconnection of the signal line 18 or the like. Thus, reliability is improved.

It is sufficient if the reinforcement portion is formed only for at least a portion of the sensor side connector 20. The magnetic sensor 15 may be a sensor for only detecting rotational speed of the axle of the automobile. A constitution for the seal device 8 is sufficient provided there is with the outer ring side seal ring 81 constituting the sensor assembly. No particular limitations are placed with respect to the disposition and form of the magnetic sensor or the magnetic ring.

The present invention can be applied to a rolling bearing apparatus for rotatably supporting an axle of a vehicle such as an automobile or the like on a vehicle body.

The present invention may be embodied in other specific forms without departing from its spirit or essential characteristics. The described embodiments are to be considered in all respects only as illustrative and not as restrictive. The scope of the invention is, therefore, indicated by the appended claims and their combination in whole or in part rather than by the foregoing description. All changes that come within the meaning and range of equivalency of the claims are to be embraced within their scope.

## Claims

1. A sensor assembly fixed to an outer ring member of a rolling bearing apparatus for vehicles that detects a rotational state of an inner ring member, comprising:
a seal ring;
a sensor integrally provided at the said seal ring;
an external member which molds said sensor with resin to integrate said sensor with said seal ring;
a sensor side connector, one end of which is successively formed with said external member and the other end of which is constituted to be attachably/detachably connected to a wire harness side connector; and
a reinforcing member which is coupled to at least either of said external member or said sensor side connector and reinforces said sensor side connector.

2. The sensor assembly according to claim 1, wherein
the other end of said external member extends radially outward, and
said reinforcing member is constituted by an extension portion of said seal ring which extends towards said other end of the external member.

3. The sensor assembly according to claim 2, wherein said reinforcing member covers a back face of the external member.

4. The sensor assembly according to claim 1, wherein the other end of said sensor side connector extends radially outward, and
said reinforcing member is constituted by the extension portion of said seal ring which extends towards said other end of said sensor side connector.

5. The sensor assembly according to claim 4, wherein said reinforcing member covers a surface of said sensor side connector.

6. The sensor assembly according to claim 1, wherein
the other end of said external member is formed into a ring shape that extends radially outward,
one end of said sensor side connector is integrally formed at said extending other end of said external member and the other end is formed into a cylindrical shape that extends further radially outward than the other end of said external member, and
said reinforcing member includes a ring-shaped reinforcing member constituted by a first extension portion of said outer ring side seal ring which extends along a back face of said other end of said external member, and a semi-cylindrical reinforcing member constituted by a second extension portion of said outer ring side seal ring which extends along a surface of said other end of said sensor side connector.

7. The sensor assembly according to claim 1, wherein a contact surface which contacts an outer peripheral surface of said outer ring member is formed at said sensor side connector.

8. The sensor assembly according to claim 1, wherein
said external member and said sensor side connector are integrally molded with the same engineering plastic,
a signal line, one end of which is connected to said sensor, and a pin, one end of which is connected to the other end of this signal line, are incorporated within said external member and said sensor side connector, and
a recess portion to which said wire harness side connector is attachably/detachably connected is provided at the other end of said sensor side connector and the other end of said pin is protrudingly disposed on a bottom face of this recess portion.

9. The sensor assembly according to claim 1, wherein said sensor is a magnetic sensor, said seal ring is an outer ring side seal ring which is composed of a nonmagnetic material, and
said magnetic sensor is disposed on an outer periphery side of said outer ring side seal ring.

10. The sensor assembly according to claim 9, wherein said magnetic sensor includes two magnetic detection portions disposed circumferentially apart from each other, and signals output from both said magnetic detection portions are so that that phase differential between the respective outputs is 90 degrees.

11. A seal apparatus, comprising:
an outer ring side seal ring which is fixed to an outer ring member and composed of a nonmagnetic material;
an inner ring side seal ring fixed to an inner ring member;
a magnetic sensor provided at an outer periphery side of said outer ring side seal ring;
a magnetic material ring which constitutes a rotation detector in conjunction with said magnetic sensor and is integrally provided at a position radially opposite to said magnetic sensor in said inner ring side seal ring;
an external member which molds said magnetic sensor with resin to integrate said magnetic sensor with said outer ring side seal ring;
a sensor side connector, one end of which is successively formed with said external member and the other end of which is constituted to be attachably/detachably connected to a wire harness side connector; and
a reinforcing member which is coupled to at least either of said external member or said sensor side connector and reinforces said sensor side connector.

12. The seal apparatus according to claim 11, wherein the other end side of said external member extends radially outward, and
said reinforcing member is constituted by an extension portion of said outer ring side seal ring which extends towards said other end of said external member.

13. The seal apparatus according to claim 12, wherein said reinforcing member covers a back face of said external member.

14. The seal apparatus according to claim 11, wherein the other end of said sensor side connector extends radially outward, and
said reinforcing member is constituted by said extension portion of said outer ring side seal ring which extends towards said other end of this sensor side connector.

15. The seal apparatus according to claim 14, wherein said reinforcing member covers a surface of said sensor side 15 connector.

16. The seal apparatus according to clam 11, wherein
the other end of said external member is formed into a ring shape which extends radially outward,
one end of said sensor side connector is integrally formed at the other end side of said extension of said external member and the other end is formed into a cylindrical shape that extends further radially outward than the other end of said external member,
wherein said reinforcing member includes a ring-shaped reinforcing member constituted by a first extension portion of said outer ring side seal ring which extends along a back face of said other end side of said external member, and a semi-cylindrical reinforcing member constituted by a second extension portion of said outer ring side seal ring which extends along a surface of said other end side of said sensor side connector.

17. The seal apparatus according to claim 11, wherein a contact surface which contacts an outer peripheral surface of said outer ring member is formed at said sensor side connector.

18. The seal apparatus according to claim 11, wherein said magnetic material ring is a pulser ring in which circumferentially alternating N-pole pieces and S-pole pieces are magnetized at a predetermined pitch.

19. The seal apparatus according to claim 11, wherein
said outer ring side seal ring includes a first cylindrical portion extending in an axial direction, and a second ring-shaped plate portion extending radially inward from an inner edge portion in the axial direction of said first cylindrical portion, said magnetic sensor is covered by said external member and is integrated therewith in a non-contact manner at the outer peripheral surface side of said first cylindrical portion, and said first cylindrical portion extends so as to cover at least either of said external member or said sensor side connector, and said reinforcing member is constituted by an extension portion of said first cylindrical portion; and
said inner ring side seal ring includes a second cylindrical portion which extend in the axial direction and is radially opposed to said first cylindrical portion, and a second ring-shaped plate portion which extend radially outward from an outer edge portion in the axial direction of said second cylindrical portion and is opposed to said first ring-shaped plate portion in the axial direction, said pulser ring is attached to an inner surface of said second ring-shaped plate portion in a state of radially opposing said magnetic sensor.

20. The seal apparatus according to claim 11, wherein said pulser ring is magnetized at a predetermined pitch in a configuration of circumferentially alternating N-pole pieces and S-pole pieces, said magnetic sensor comprises a first and second magnetic detection portion spaced circumferentially apart from each other at a predetermined distance, both magnetic detection portions produce rectangular wave signals the phases of which are shifted from each other by 90 degrees, and said interval between them is 1/4 of said pitch.

21. A rolling bearing apparatus for vehicles, comprising:
an outer ring member fixed to a vehicle body;
an inner ring member which is disposed concentrically with said outer ring member;
a plurality of rolling members which are rotatably arranged disposed said outer ring member and said inner ring member;
an outer ring side seal ring fixed to said outer ring member;
an inner ring side seal ring which constitutes a seal apparatus in conjunction with said outer ring side seal ring and is fixed to said inner ring member;
a magnetic sensor integrally provided at said outer ring side seal ring;
an external member which molds said magnetic sensor with resin to integrate said magnetic sensor with said outer ring side seal ring;
a sensor side connector, one end of which is successively formed with said external member and the other end of which is attachably/detachably connected to a wire harness side connector;
a reinforcing member which is coupled to at least either of said external member or said sensor side connector and reinforces said sensor side connector; and
a pulser ring which constitutes a rotation detector in conjunction with said magnetic sensor and is fixed to a side of said inner ring side seal ring.

22. The rolling bearing apparatus for vehicles according to claim 21, wherein
one end of said external member molds said sensor and said outer ring side seal ring with resin and the other end thereof extends radially outward, and
said reinforcing member is constituted by an extension portion of said outer ring side seal ring which extends towards a back face of said external member so as to cover such back face.

23. The rolling bearing apparatus for vehicles according to claim 21, wherein
the other end of said sensor side connector extends radially outward, and
said reinforcing member is constituted by said extension portion of said outer ring side seal ring which extends towards a surface of said sensor side connector so as to cover such surface.

24. The rolling bearing apparatus for vehicles according to claim 21, wherein
the other end of said external member is formed into a ring shape which extends radially outward,
one end of said sensor side connector is integrally formed at the other end side of said extension of said external member and the other end is formed into a cylindrical shape that extends further radially outward than the other end of said external member,
said reinforcing member includes a ring-shaped reinforcing member constituted by a first extension portion of said outer ring side seal ring which extends along a back face of said other end of said external member so as to cover such back face, and a semi-cylindrical reinforcing member constituted by a second extension portion of said outer ring side seal ring which extends along a surface of said other end of said sensor side connector so as to cover such surface.

25. The rolling bearing apparatus for vehicles according to claim 21, wherein a contact surface which contacts an outer peripheral surface of said outer ring member is formed at said sensor side connector.

26. The rolling bearing apparatus for vehicles according to claim 21, wherein said external member comprises a ring-shaped contact surface which axially contacts an end face of said outer ring member to thereby position said seal apparatus.

27. The rolling bearing apparatus for vehicles according to claim 21, wherein
said magnetic sensor includes two magnetic detection portions arranged circumferentially apart from each other; and a phase relationship between detection signals from both magnetic detection portions is set such that when one magnetic detection portion produces a first signal, the other magnetic detection portion produces a second signal the phase of which is shifted from that of said first signal by 90 degrees, and
said pulser ring is constituted so that circumferentially alternating N-pole pieces and S-pole pieces are magnetized at a predetermined pitch and a phase difference between respective outputs from both said magnetic detection portions is set to be λ /4 relative to the magnetized pitch λ.

28. The rolling bearing apparatus for vehicles according to claim 21, wherein
said outer ring side seal ring includes a first cylindrical portion extending in an axial direction, and a second ring-shaped plate portion extending radially inwardly from an inner edge portion in the axial direction of said first cylindrical portion, said magnetic sensor is molded with resin by said external member and is integrated in a non-contact manner with an outer peripheral surface of said first cylindrical portion and said first cylindrical portion extends so as to cover at least either of said external member or said sensor side connector, and said reinforcing member is constituted by an extension portion of said first cylindrical portion, and
said inner ring side seal ring includes a second cylindrical portion which extends in the axial direction and is radially opposed to said first cylindrical portion, and a second ring-shaped plate portion which extends radially outward from an outer edge portion in the axial direction of said second cylindrical portion and is opposed to said first ring-shaped plate portion in the axial direction, and said pulser ring is attached to an inner surface of said second ring-shaped plate portion in a state of radially opposing said magnetic sensor.

29. The rolling bearing apparatus for vehicles according to claim 21, wherein said vehicle body side comprises a cutaway through which said sensor side connector can penetrate, and said sensor side connector is inserted into said cutaway in a state where said outer ring member is fixed to the vehicle body.

30. The rolling bearing apparatus for vehicles according to claim 21, wherein said inner ring member includes a hub wheel provided with a flange portion for wheel attachment at an outer peripheral surface on the vehicle outward side, and an inner ring outwardly fitted to a vehicle inward side cylindrical minor diameter portion of this hub wheel, and said inner ring side seal ring is fixed to said inner ring.
